# EUROPÄISCHE PATENTSCHRIFT

(11) **EP 1 392 589 B1**
(45) Veröffentlichungstag und Bekanntmachung des Hinweises auf die Patenterteilung: **15.06.2005**
(21) Anmeldenummer: 02769448.8
(22) Anmeldetag: 04.04.2002
(51) Int. Cl.: B65H 31/24

(54) **AUSLAGEVORRICHTUNG EINER BOGEN VERARBEITENDE MASCHINE UND VERFAHREN ZUM AUSLEGEN VON BOGEN IN EINER SOLCHEN MASCHINE**
STACKING DEVICE OF A MACHINE FOR PROCESSING SHEETS AND METHOD FOR STACKING SHEETS IN SUCH A MACHINE
DISPOSITIF D'EMPILAGE POUR UNE MACHINE TRAITANT DES FEUILLES ET PROCEDE POUR EMPILER DES FEUILLES DANS UNE TELLE MACHINE

(30) Priorität: 12.05.2001 DE 10123326
(43) Veröffentlichungstag der Anmeldung: 03.03.2004
(73) Patentinhaber: KBA-GIORI S.A., 1003 Lausanne (CH)
(72) Erfinder: HAHN, Thilo, 97337 Dettelbach (DE); NAGLER, Kurt, Georg, 97299 Zell/Main (DE); SCHAEDE, Johannes, Georg, 97074 Würzburg (DE); WAGNER, Peter, Eugen, 97947 Grünsfeld (DE)
(74) Vertreter: Ganguillet, Cyril
(86) Internationale Anmeldenummer: PCT/DE2002/001222
(87) Internationale Veröffentlichungsnummer: WO 2002/092485

(56) Entgegenhaltungen:
- CH-A- 464 238
- DE-A- 4 208 547
- US-A- 3 907 274

## Beschreibung

Die Erfindung betrifft eine Auslagevorrichtung für eine Bogen verarbeitende Maschine und ein Verfahren zum Auslegen von Bogen in einer Bogen verarbeitenden Maschine.

Eine Auslagevorrichtung dient dazu, bedruckte Bogen am Ausgang einer Bogen verarbeitenden Maschine zu einem Stapel aufzuschichten, der, wenn er ein vorgegebenes Ausmaß erreicht hat, zur Weiterverarbeitung abtransportiert wird. Während des Abtransportes können keine weiteren Bogen auf dem Stapel abgeladen werden. Um zu verhindern, dass dies eine Unterbrechung des Bogenverarbeitung erzwingt, sind Auslagevorrichtungen für Bogendruckmaschinen entwickelt worden, die zwei Auslagepositionen, auf denen Bogenstapel gebildet werden können, aufweisen und die zwischen dem Auslegen eines Bogens an der ersten oder der zweiten Auslageposition umschaltbar sind. Wenn bei einer solchen Auslagevorrichtung ein Bogenstapel abtransportiert werden muss, genügt es, auf das Auslegen an der jeweils anderen Auslageposition umzuschalten, so dass an dieser ein neuer Bogenstapel aufgebaut wird. Während dies geschieht, kann der fertige Stapel abtransportiert werden.

Mit einer solchen bekannten Auslagevorrichtung können Bogenstapel gebildet werden, die viele Hundert bis Tausend Bogen enthalten. Die Zahl der Bogen ist im wesentlichen nur begrenzt durch die Stapelhöhe, bis zu der der Bogenstapel in sich stabil und kippfest bleibt. Dabei ergibt sich jedoch das Problem, dass bei manchen Druckprozessen die Druckfarbe zum Zeitpunkt des Auslegens der Bogen noch nicht völlig trocken ist. Wenn die Bogen in der Auslegevorrichtung gestapelt werden, können die Bogen im Inneren eines Stapels kaum noch trocknen, so dass bei hohen Stapeln der Druck, dem die unteren Bogen ausgesetzt sind, dazu führen kann, dass diese aneinander haften, und dass Farbe von einem Bogen auf den anderen übertragen wird.

Um dieser Gefahr zu begegnen, ist z. B. in US 39 07 274 A eine Auslagevorrichtung vorgeschlagen worden, bei der die Bogen jeweils auf einer Tragplatte einer Palette ausgelegt werden, wo sie einen Stapel von geringer Höhe bilden, in dem keine Gefahr des Aneinanderhaftens und der Farbübertragung besteht. Wenn eine Palette voll ist, d. h. wenn der Stapel darauf eine vorgegebene Höhe erreicht hat, wird sie in der Auslagevorrichtung abgesenkt, und eine neue Palette wird an ihrer Stelle platziert. Die vollen Paletten werden zu einem Palettenstapel aufeinandergeschichtet, in dem sich jede Palette mit ihren Füßen auf einer Tragplatte einer darunter liegenden Palette abstützt, ohne dabei den auf dieser befindlichen Bogenstapel zu belasten.

Das Einsetzen einer neuen Palette erfordert jedes Mal eine Unterbrechung des Auslegevorganges. Um den Betrieb einer vorgelagerten Druckmaschine nicht unterbrechen zu müssen, verfügt daher auch die aus US 39 07 274 A bekannte Auslagevorrichtung über zwei Auslagepositionen, und der Strom der Bogen wird jedes Mal von der einen Auslageposition zur anderen umgeschaltet, wenn an der einen eine neue Palette eingesetzt werden muss. Das Auswechseln der Palette erfolgt von der Stirnseite manuell.

Bei der Produktion von nummerierten Druckerzeugnissen führt eine solche Betriebsweise dazu, dass, wenn man annimmt, dass auf jede Palette n Bogen ausgelegt werden, und die Bogen mit 1 beginnend nummeriert sind, eine erste Palette an der ersten Auslageposition die Bogen 1 bis n, die erste Palette an der zweiten Auslageposition die Bogen n+1 bis 2n, die zweite Palette an der ersten Auslageposition die Bogen 2n+1 bis 3n, usw. erhält. D.h. die Palettenstapel, die an den zwei Auslagepositionen gebildet werden, enthalten jeweils Bogen 1 bis n, 2n+1 bis 3n, 4n+1 bis 5n, ... bzw. n+1 bis 2n, 3n+1 bis 4n, usw.. Eine durchgehende Nummerierung der Bogen geht auf diese Weise verloren. Dadurch wird eine Vollständigkeitskontrolle der Bogen an einer späteren Stufe ihrer Verarbeitung erschwert. Eine solche Vollständigkeitskontrolle ist jedoch von hoher Bedeutung, insbesondere wenn die Bogen mit Banknoten oder ähnlichen Wertscheinen bedruckt sind.

Die CH 464 238 A offenbart einen Bogenausleger mit zwei hintereinander angeordneten Stapeltischen. Der hintere Stapeltisch ist einer Hilfsstapeleinrichtung zugeordnet, mit der abgelegte Bogen von einer oberen Auslageposition des Hilfsstapeltisches auf eine untere Position des hinteren Hauptstapels bewegt und dort auf dem Hauptstapel abgelegt werden.

Die DE 42 08 547 A1 beschreibt eine Vorrichtung zum Stapeln von Wellpappe-Zuschnitten, bei der ein Stapel in einer ersten Auslageposition gebildet wird. Anschließend wird dieser Stapel zu einer zweiten Auslageposition transportiert und es werden weitere Zuschnitte darauf abgelegt.

Der Erfindung liegt die Aufgabe zugrunde, eine Auslagevorrichtung für eine Bogen verarbeitende Maschine und Verfahren zum Auslegen von Bogen in einer Bogen verarbeitenden Maschine zu schaffen, mit der unterbrechungslose Bogen ausgelegt werden.

Die Aufgabe wird erfindungsgemäß durch die Merkmale der Ansprüche 1 und 8 gelöst.

Die mit der Erfindung erzielbaren Vorteile bestehen insbesondere darin, dass trotz der Möglichkeit eines unterbrechungslosen Druckbetriebes ein einziger Auslagestapel erhalten wird, in dem die Bogen in der gleichen Reihenfolge aufeinanderfolgen, in der sie die Auslagevorrichtung erreicht haben, so dass eine ggf. vorhandene Nummerierung der Bogen unverändert erhalten bleibt.

Zu diesem Zweck verfügt die Auslagevorrichtung über Transporteinrichtungen zum Transportieren von Paletten von jeder der Auslagepositionen zu einem einzigen Stapel und Stapeln der Paletten auf diesem Stapel.

Vorzugsweise ist dieser Stapel vertikal unterhalb der ersten Auslageposition vorgesehen, und eine erste der Transporteinrichtungen ist ausgelegt zum vertikalen Absenken einer Palette von der ersten Auslageposition auf den Stapel. Ferner sind zweckmäßigerweise eine zweite und dritte Transportvorrichtung vorgesehen, die zum vertikalen Absenken einer Palette von der zweiten Auslageposition in eine Zwischenposition bzw. zum Verschieben der Palette aus der Zwischenposition zum Stapel ausgelegt sind. Die dritte Transportvorrichtung ist vorzugsweise auf einem Zwischenniveau zwischen der zweiten Auslageposition und der Oberseite des Stapels angeordnet und übergibt eine Palette an die erste Transportvorrichtung, die das Absetzen der Palette auf dem Stapel übernimmt.

Zweckmäßigerweise ist ein höhenverstellbarer Träger für den Stapel vorgesehen, so dass die Oberseite des Stapels so lange auf einem konstanten Niveau gehalten werden kann, bis der Stapel eine vorgegebene Palettenzahl erreicht hat und abtransportiert werden muss.

Eine besonders einfache Konstruktion ergibt sich, wen die erste Transportvorrichtung die Höhenverstellbarkeit des Trägers für den Stapel gewährleistet.

Die Auslagevorrichtung wird zweckmäßigerweise so betrieben, dass jeweils eine Anzahl von Bogen an einer der Auslagepositionen auf eine Palette ausgelegt wird, dann auf das Auslegen einer weiteren Anzahl von Bogen an der anderen Auslageposition umgeschaltet wird, und während des Auslegens der Bogen an der anderen Auslageposition die Palette von der einen Auslageposition auf den Stapel transportiert wird. Während dieses Transportes wird an der anderen Auslegeposition die nächste Palette befüllt, und sobald diese voll ist, wird auf das Auslegen an der einen Auslageposition zurückgeschaltet, um nun die Palette von der anderen Auslageposition auf den Stapel zu transportieren.

Ein Ausführungsbeispiel der Erfindung ist in der Zeichnung dargestellt und wird im folgenden näher beschrieben.

Es zeigen:

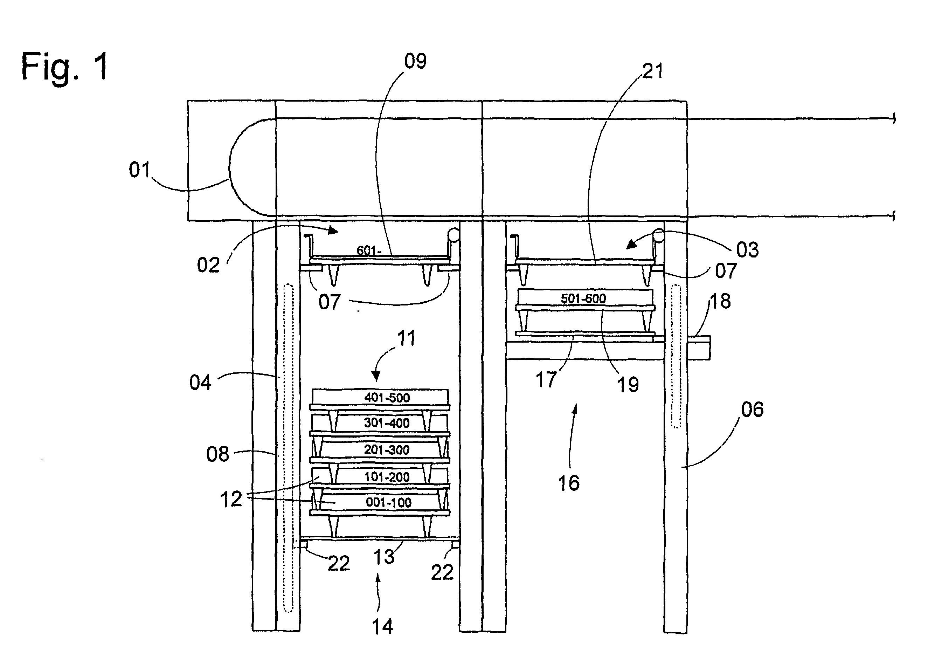

- Fig. 1 bis 3: schematische Seitenansichten einer Auslagevorrichtung in drei Phasen ihres Betriebes.

Die Auslagevorrichtung umfasst einen Kettenbogenausleger mit einer endlosen Auslegerkette 01, deren Verlauf schematisch in der Fig. 1 dargestellt ist. An der Auslegerkette 01 sind in an sich bekannter Weise in festen Abständen Kettengreifersysteme montiert, deren Aufbau zum Beispiel aus EP 07 09 329 B1 bekannt ist und die in der Fig. 1 nicht dargestellt sind. Jedes Kettengreifersystem besteht im wesentlichen aus einer Traverse, die mit einer Anzahl von Greifem versehen ist, welche steuerbar sind, um an einer (nicht dargestellten) Aufnahmeposition eine Bogenvorderkante eines bedruckten Bogens einzuklemmen und sie an einer Auslageposition 02 oder 03 wieder freizugeben. Die zwei Auslagepositionen 02; 03 befinden sich im oberen Bereich von zwei nebeneinander angeordneten Trägergestellen 04; 06. Die Trägergestelle 04; 06 weisen in ihrem oberen Bereich jeweils horizontal verschiebbare oder schwenkbare Tragarme 07 auf, die an jeweils vier an den Ecken der Trägergestelle 04; 06 angeordneten Holmen 08 montiert sind und in ihrer in der Fig. 1 dargestellten, ins Innere der Trägergestelle 04; 06 eingefahrenen Stellung jeweils eine Palette 09; 21 unterstützen.

Ein Palettenstapel 11 aus in diesem Beispiel fünf Paletten 12 ist auf einer an den Holmen 08 des ersten Trägergestelles 04 auf- und abwärts verschiebbaren Platte 13 aufgebaut. Eine erste Transportvorrichtung 14 zum Antreiben der vertikalen Bewegung der Platten 13 kann z. B. durch in den Holmen 08 untergebrachte, motorgetriebene endlose Ketten mit jeweils einem daran angebrachten Tragarm 22 zum Unterstützen der Platte 13 gebildet sein, wie im linken vorderen Holm 08 des Trägergestelles 04 schematisch dargestellt.

Eine zweite Transportvorrichtung 16 zum vertikalen Bewegen von Paletten 19 ist auch im zweiten Trägergestell 06 montiert. Ihr vertikaler Hub ist kleiner als der der ersten Transportvorrichtung 14. Eine zum Tragen einer Palette 19 dienende Platte 17 der zweiten Transportvorrichtung 16 ist mit Hilfe einer dritten Transportvorrichtung 18 horizontal verschiebbar.

In dem in Fig. 1 gezeigten Stadium des Betriebes der Auslagevorrichtung befinden sich auf der Platte 13 fünf Paletten 12, die jeweils mit Stapeln von je 100 nummerierten Bogen beladen sind. Die unterste Palette 12 trägt die zuerst ausgelegten Bogen mit Nummer 1 bis 100, die darüber liegende diejenigen mit Nummer 101 bis 200, usw., bis zur fünften Palette 12, die Bogen 401 bis 500 trägt. Eine mit Bogen 501 bis 600 voll beladene Palette 19 ist vor kurzem aus der Auslageposition 03 durch die zweite Transportvorrichtung 16 abgesenkt worden, und an der zuvor von ihr belegten Auslageposition 03 ist die leere Palette 21, von Hand oder durch einen nicht dargestellten Zuführmechanismus, eingesetzt worden. Da während des Absenkens der vollen Palette 19 und des Einfügens der neuen Palette 21 an der zweiten Auslageposition 03 nicht ausgelegt werden kann, ist auf Bogenauslegen an der ersten Auslageposition 02 umgeschaltet worden, wo auf der Palette 09 beginnend mit dem 601. Bogen ein weiterer Bogenstapel aufgebaut wird.

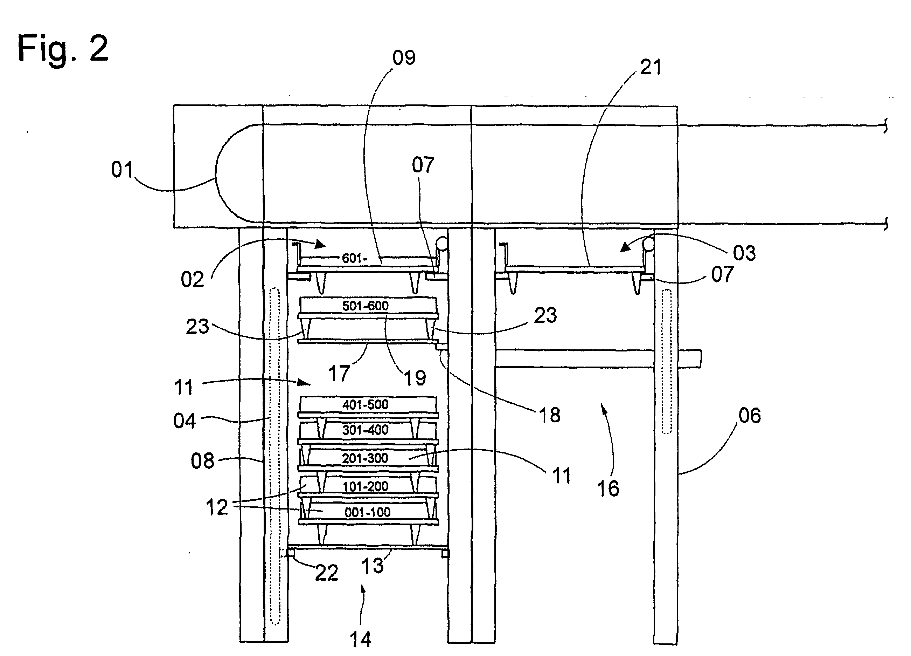

In der in Fig. 2 gezeigten Phase des Betriebes hat die zweite Transportvorrichtung 16 die Platte 17 bis an das untere Ende ihres Bewegungsbereiches abgesenkt, und die dritte Transportvorrichtung 18 hat sie mitsamt der Palette 19 in das erste Trägergestell 04 hinein verschoben, so dass die Palette 19 vertikal mit dem Palettenstapel 11 fluchtet. Der Vorgang des Bogenauslegens auf die Palette 09 geht unterdessen weiter.

Anschließend beginnt die erste Transportvorrichtung 14, den Palettenstapel 11 anzuheben, so dass Füße 23 der Palette 19 auf der obersten Palette 12 des Palettenstapels 11 zu stehen kommen. Die dritte Transportvorrichtung 18 zieht die dadurch entlastete Platte 17 zurück in das zweite Trägergestell 06.

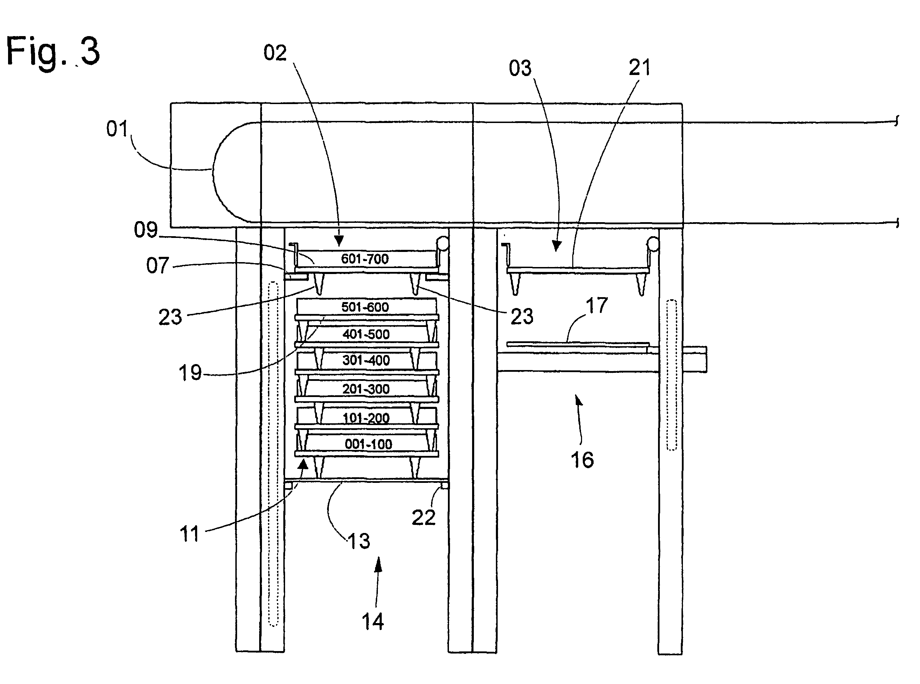

Wenn dies geschehen ist, setzt die erste Transportvorrichtung 14 die Aufwärtsbewegung des Palettenstapels 11 fort, wie in Fig. 3 gezeigt. Die Palette 19 befindet sich hier oberhalb des Niveaus der Platte 17 und kurz unterhalb der inzwischen vollständig mit Bogen 601 bis 700 beladenen Palette 09. Ab diesem Zeitpunkt werden die Greifersysteme der Auslegerkette angesteuert, um die von ihnen geführten Bogen auf die Palette 21 an der zweiten Auslageposition 03 auszulegen.

Indem die Platte 13 von der ersten Transportvorrichtung 14 noch über die in Fig. 3 gezeigte Position hinaus angehoben wird, kommen schließlich die Füße 23 der Palette 09 auf der Palette 19 zu stehen. Die nun entlasteten Tragarme 07 werden eingezogen, um der Palette 09 den Weg nach unten freizugeben. Der nun aus sieben Paletten 12 bestehende Palettenstapel 11 wird wieder abgesenkt, und auf dem anschließend erneut ausgefahrenen Tragarmen 07 kann eine weitere Palette platziert werden, die, sobald die Palette 21 vollständig beladen ist, mit Bogen 801 bis 900 beladen werden wird.

Durch zyklisch abwechselndes Beladen von Paletten an den zwei Auslagepositionen 02; 03 und alternierendes Zusammenführen der beladenen Paletten wird ein Palettenstapel 11 erhalten, in dem die Bogen von unten nach oben fortlaufend durchnummeriert sind.

### Bezugszeichenliste

- 01: Auslegerkette
- 02: Auslageposition
- 03: Auslageposition
- 04: Trägergestell
- 05: -
- 06: Trägergestell
- 07: Tragarm
- 08: Holm
- 09: Palette
- 10: -
- 11: Palettenstapel
- 12: Palette
- 13: Platte
- 14: Transportvorrichtung, erste
- 15: -
- 16: Transportvorrichtung, zweite
- 17: Platte
- 18: Transportvorrichtung, dritte
- 19: Palette
- 20: -
- 21: Palette
- 22: Tragarm
- 23: Fuß

## Patentansprüche

1. Auslagevorrichtung einer Bogen verarbeitenden Maschine, mit folgenden Merkmalen:
- die Auslagevorrichtung ist zwischen einer ersten Auslageposition (02) und einer zweiten Auslageposition (03) umschaltbar,
- die erste Auslageposition (02) und die zweite Auslageposition (03) sind, bezogen auf die Transportrichtung der Auslagevorrichtung, hinter einander angeordnet,
- eine Transporteinrichtung (14; 16; 18) ist zum Transportieren von in der zweiten Auslageposition (03) abgelegten Bogen zur ersten Auslageposition (02) angeordnet,
- die Bogen sind auf einer Palette (09; 21) abgelegt,
- in der ersten Auslageposition (02) ist ein Palettenstapel (11) angeordnet,
- die Transporteinrichtung (14; 16; 18) transportiert die Palette (09; 21) mit darauf abgelegten Bogen von der zweiten Auslageposition (03) auf den Palettenstapel (11) der ersten Auslageposition (02).

2. Auslagevorrichtung nach Anspruch 1, **dadurch gekennzeichnet, dass** die Transporteinrichtung (14; 16; 18) zum Transportieren von Paletten (09; 21) von jeder der Auslagepositionen (02; 03) zu einem einzigen Palettenstapel (11) und Stapeln der Paletten (12; 19) auf dem Palettenstapel (11) angeordnet ist.

3. Auslagevorrichtung nach Anspruch 2, **dadurch gekennzeichnet, dass** der Palettenstapel (11) vertikal unterhalb der ersten Auslageposition (02) vorgesehen ist und dass eine erste Transporteinrichtung (14) zum vertikalen Absenken einer Palette (09) von der ersten Auslageposition (02) auf den Palettenstapel (11) ausgelegt ist.

4. Auslagevorrichtung nach einem der Ansprüche 2 oder 3, **dadurch gekennzeichnet, dass** eine zweite Transportvorrichtung (16) zum vertikalen Absenken einer Palette (21) von der zweiten Auslageposition (03) in eine Zwischenposition und eine dritte Transportvorrichtung (18) zum Verschieben der Palette (21) aus der Zwischenposition zum Palettenstapel (11) ausgelegt sind.

5. Auslagevorrichtung nach den Ansprüchen 3 und 4, **dadurch gekennzeichnet, dass** die dritte Transportvorrichtung (18) auf einem Zwischenniveau zwischen der zweiten Auslageposition (03) und der Oberseite des Palettenstapels (11) angeordnet ist und eine Palette (21) an die erste Transportvorrichtung (14) übergibt.

6. Auslagevorrichtung nach einem der vorhergehenden Ansprüche, **dadurch gekennzeichnet, dass** die Auslagevorrichtung einen höhenverstellbaren Tragarm (22) für den Palettenstapel (11) aufweist.

7. Auslagevorrichtung nach Anspruch 6, **dadurch gekennzeichnet, dass** die erste Transportvorrichtung (14) die Höhenverstellbarkeit des Tragarms (22) gewährleistet.

8. Verfahren zum Auslegen von Bogen mittels einer Auslagevorrichtung in einer Bogen verarbeitenden Maschine, wobei wahlweise eine Mehrzahl von Bogen an einer ersten Auslageposition (02) oder einer zweiten, bezogen auf die Transportrichtung der Auslagevorrichtung hinter der ersten angeordneten Auslageposition (03) abgelegt wird und eine Mehrzahl von abgelegten Bogen von der zweiten Auslageposition (03) zur ersten Auslageposition (02) transportiert werden, wobei jeweils eine Anzahl von Bogen an der zweiten Auslageposition (03) auf eine Palette (09; 21) ausgelegt wird, dann auf das Auslegen einer Anzahl von Bogen an der ersten Auslageposition (02) umgeschaltet wird und während des Auslegens der Bogen an der ersten Auslegeposition (02) die Palette (09; 21) von der zweiten Auslegeposition (03) auf einen Palettenstapel (11) in der ersten Auslageposition (02) transportiert wird.

## Claims

1. Stacking device of a sheets processing machine, having the following features:
- the stacking device can be switched between a first stacking position (02) and a second stacking position (03),
- the first stacking position (02) and the second stacking position (03) are arranged one behind the other relatively to the transport direction of the stacking device,
- a transport unit (14; 16; 18) is designed for transporting sheets deposited in the second stacking position (03) to the first stacking position (02),
- the sheets are deposited on a pallet (09; 21),
- a pallet stack (11) is arranged in the first stacking position (02),
- the transport unit (14; 16; 18) transports the pallet (09; 21) with sheets deposited thereon from the second stacking position (03) onto the pallet stack (11) of the first stacking position (02).

2. Stacking device according to claim 1, **characterized in that** the transport unit (14; 16; 18) is designed for transporting pallets (09; 21) from each of the stacking positions (02; 03) to a single pallet stack (11) and for stacking the pallets (12; 19) on the pallet stack (11).

3. Stacking device according to claim 2, **characterized in that** the pallet stack (11) is provided vertically below the first stacking position (02) and that a first transport unit (14) is designed for vertically lowering a pallet (09) from the first stacking position (02) onto the stack (11).

4. Stacking device according to either of claims 2 or 3, **characterized in that** a second transport unit (16) is designed for vertically lowering a pallet (21) from the second stacking position (03) into an intermediate position and a third transport unit (18) is designed for shifting the pallet (21) from the intermediate position to the pallet stack (11).

5. Stacking device according to claims 3 and 4, **characterized in that** the third transport unit (18) is arranged on an intermediate level between the second stacking position (03) and top of the pallet stack (11) and transfers a pallet (21) to the first transport unit (14).

6. Stacking device according to any one of the preceding claims, **characterised in that** the stacking device has a height-adjustable support arm (22) for the pallet stack (11).

7. Stacking device according to claim 6, **characterized in that** the height adjustment facility of the support arm (22) is provided by the first transport unit (14).

8. Method for stacking sheets by means of a stacking device in a machine for processing sheets, a plurality of sheets being deposited either at a first stacking position (02) or a second stacking position (03) arranged behind the first in relation to transport direction of the stacking device, and a plurality of deposited sheets being transported from the second stacking position (03) to the first stacking position (02), a number of sheets in each instance being stacked on a pallet (09; 21) at the second stacking positions (03), before switching to the stacking of a number of sheets at the first stacking position (02), and the pallet (09;21) being transported from the second stacking position (03) to a pallet stack (11) in the first stacking position (02) whilst sheets are being stacked at the first stacking position (02).

## Revendications

1. Dispositif de réception d'une machine à traiter des feuilles, présentant les caractéristiques ci-après :
- le dispositif de réception peut être commuté entre une première position de réception (02) et une deuxième position de réception (03),
- la première position de réception (02) et la deuxième position de réception (03) sont disposées l'une après l'autre dans le sens de transport du dispositif de réception,
- un dispositif de transport (14; 16; 18) est agencé pour le transport des feuilles déposées à la deuxième position de réception (03) vers la première position de réception (02),
- les feuilles sont déposées sur une palette (09; 21),
- une pile de palettes (11) est disposée à la première position de réception (02),
- le dispositif de transport (14; 16; 18) transporte la palette (09; 21) portant les feuilles déposées de la deuxième position de réception (03) sur la pile de palettes (11) de la première position de réception (02).

2. Dispositif de réception selon la revendication 1, **caractérisé en ce que** le dispositif de transport (14; 16; 18) est agencé pour le transport des palettes (09; 21) de chacune des positions de réception (02; 03) vers une pile unique de palettes (11) et pour l'empilage des palettes (12; 19) sur la pile de palettes (11).

3. Dispositif de réception selon la revendication 2, **caractérisé en ce que** la pile de palettes (11) est prévue verticalement au-dessous de la première position de réception (02), et **en ce qu'**un premier dispositif de transport (14) est conçu pour faire descendre verticalement une palette (09) de la première position de réception (02) sur la pile de palettes (11).

4. Dispositif de réception selon l'une des revendications 2 ou 3, **caractérisé en ce qu'**un deuxième dispositif de transport (16) est conçu pour faire descendre verticalement une palette (21) de la deuxième position de réception (03) dans une position intermédiaire, et **en ce qu'**un troisième dispositif de transport (18) est conçu pour le déplacement de la palette (21) de la position intermédiaire vers la pile de palettes (11).

5. Dispositif de réception selon les revendications 3 et 4, **caractérisé en ce que** le troisième dispositif de transport (18) est disposé à un niveau intermédiaire entre la deuxième position de réception (03) et le haut de la pile de palettes (11) et transfère une palette (21) au premier dispositif de transport (14).

6. Dispositif de réception selon l'une des revendications précédentes, **caractérisé en ce que** le dispositif de réception présente un bras support (22) réglable en hauteur pour la pile de palettes (11).

7. Dispositif de réception selon la revendication 6, **caractérisé en ce que** le premier dispositif de transport (14) assure la capacité de réglage en hauteur du bras support (22).

8. Procédé de réception de feuilles au moyen d'un dispositif de réception dans une machine à traiter des feuilles, dans lequel une pluralité de feuilles sont déposées au choix à une première position de réception (02) ou à une deuxième position de réception (03) disposée après la première dans le sens de transport du dispositif de réception, et une pluralité de feuilles déposées sont transportées de la deuxième position de réception (03) à la première position de réception (02), un nombre donné de feuilles étant déposé à la deuxième position de réception (03) sur une palette (09; 21), après quoi le système commute la réception d'un nombre donné de feuilles sur la première position de réception (02) et la palette (09; 21) est transportée pendant la réception des feuilles à la première position de réception (02) de la deuxième position de réception (03) sur une pile de palettes (11) à la deuxième position de réception (03).
